(19) **Europäisches Patentamt**
**European Patent Office**
**Office européen des brevets**

(11) **EP 1 841 156 A1**

(12) **EUROPEAN PATENT APPLICATION**

(43) Date of publication:
**03.10.2007 Bulletin 2007/40**

(51) Int Cl.:
*H04L 25/03* (2006.01)        *H04L 9/00* (2006.01)

(21) Application number: **06006875.6**

(22) Date of filing: **31.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **MATSUSHITA ELECTRIC INDUSTRIAL CO., LTD**
**Kadoma-shi, Osaka 571-8501 (JP)**

(72) Inventor: **Golitschek Edler von Elbwart, Alexander**
**63225 Langen (DE)**

(74) Representative: **Grünecker, Kinkeldey, Stockmair & Schwanhäusser**
**Anwaltssozietät**
**Maximilianstrasse 58**
**80538 München (DE)**

(54) **Scrambling of data and reference symbols**

(57)    The invention relates to a method for scrambling a sequence of symbols comprising at least two reference symbols ($R_1$, $R_2$) and at least one first data symbol (D), said method comprising obtaining a first reference symbol ($R_1$) and a second reference symbol ($R_2$), determining a first scrambling symbol ($S_1$) corresponding to the first reference symbol ($R_1$) and a second scrambling symbol ($S_7$) corresponding to the second reference symbol ($P_2$), and obtaining at least one first data symbol (D) comprised in a range from the first reference symbol ($R_1$) to the second reference symbol ($R_2$) in the sequence of symbols. In order to improve the accuracy of the channel estimation at a receiver and achieve high radio resource usage efficiency, a third scrambling symbol ($S_x$) corresponding to the at least one first data symbol (D) is determined as an interpolated value of the first scrambling symbol ($S_1$) and the second scrambling symbol ($S_7$).

Linear Interpolation
(reference scrambling symbol power is 1)

Scrambling for symbol #1
(Reference)

Scrambling for symbol #2
(Data)

Scrambling for symbol #3
(Data)

Scrambling for symbol #4
(Data)

Scrambling for symbol #5
(Data)

Scrambling for symbol #6
(Data)

Scrambling for symbol #7
(Reference)

Power = 1

**Fig. 5**

Printed by Jouve, 75001 PARIS (FR)

**Description**

**FIELD OF THE INVENTION**

The invention relates, according to one aspect thereof, to a method for scrambling a sequence of symbols comprising at least two reference symbols and at least one data symbol. It further relates, according to a second aspect thereof, to a method for scrambling a matrix of symbols comprising at least two reference symbols and at least one data symbol. According to a third aspect of the invention, a method for scrambling a matrix of symbols comprising at least four reference symbols and at least one data symbol is presented. The invention also relates to corresponding methods for transmitting from a transmitting end to a receiving end such sequence of symbols and matrix of symbols. According to yet another aspect of the invention, corresponding apparatuses for scrambling such sequence of symbols and matrix of symbols, and corresponding apparatuses for transmitting to a receiving end such sequence of symbols and matrix of symbols, are presented. The method according to the invention is particularly applicable to communication systems where the data is composed of at least reference and data symbols that are multiplexed in at least one of time domain, frequency domain, or code domain.

**BACKGROUND OF THE INVENTION**

Wireless communication systems can be classified to Frequency Division Multiple Access (FDMA), Time Division Multiple Access (TDMA) and Code Division Multiple Access (CDMA) systems in terms of the employed medium access technology. In wireless cellular communication, FDMA was mainly employed in analog wireless systems such as AMPS and NMT, whereas TDMA has become dominant in digital wireless systems such as GSM. CDMA was first applied to commercial use in 1996 through the IS-95 system and has become the standard medium access technology of the IMT-2000 (International Mobile Telecommunication) systems.

W-CDMA (Wideband Code Division Multiple Access) is a radio interface for IMT-2000 system, which was standardized for use as the 3rd generation wireless mobile telecommunication system. It provides a variety of services such as voice services and multimedia mobile communication services in a flexible and efficient way. The standardization bodies in Japan, Europe, USA, and other countries have jointly organized a project called the 3rd Generation Partnership Project (3GPP) to produce common radio interface specifications for W-CDMA. The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4, Release 5 and Release 6.

The CDMA systems are subdivided into the Direct-Sequence CDMA, the Frequency-Hopping CDMA and Multi-Carrier CDMA with respect to the employed spectrum-spreading method. In Direct-Sequence CDMA systems, a user-specific pseudo-noise sequence with a high chip rate is directly multiplied to a low symbol rate data sequence to expand the data spectrum. In typical cellular applications, a Direct-Sequence CDMA signal is generated through two steps named spreading and scrambling. Firstly, an orthogonal spreading code, also referred to as channelization code, is multiplied to the data sequence, which expands the signal bandwidth and makes each user's signal orthogonal to those of the other users, or other data channels. In IMT-2000 W-CDMA and cdma2000 systems, the orthogonal variable spreading factor codes take the role both in the downlink and the uplink. Secondly, the channelized data signal is randomised through multiplication of a pseudo-noise code, typically of the same rate, which is the chip scrambling process. The employed pseudo-noise code is called the scrambling code of the signal.

As the transmitted Direct-Sequence CDMA signal usually arrives at the receiving side via multiple propagation paths with different delays, the orthogonality among data channels imposed by the channelization processing cannot often be maintained at the receiver front-end. Furthermore, as the auto- and cross-correlation property of the orthogonal channelization codes is very poor, the interference resulting from the multipath propagation can critically degrade the data detection performance unless another counter-action is taken. Therefore, the scrambling processing that randomises the user signal while keeping a good correlation property is essential in wireless Direct-Sequence CDMA systems.

In the downlink, a cell-specific scrambling sequence is assigned to each cell, which makes the neighbouring cell interferences appear like random noises at the front-end of the mobile unit receiver. In the uplink, a user-specific scrambling sequence is assigned to each mobile unit, as the timing alignment among different users is not guaranteed.

In the following, a conventional method for scrambling data, as it is used in UMTS, will be described.

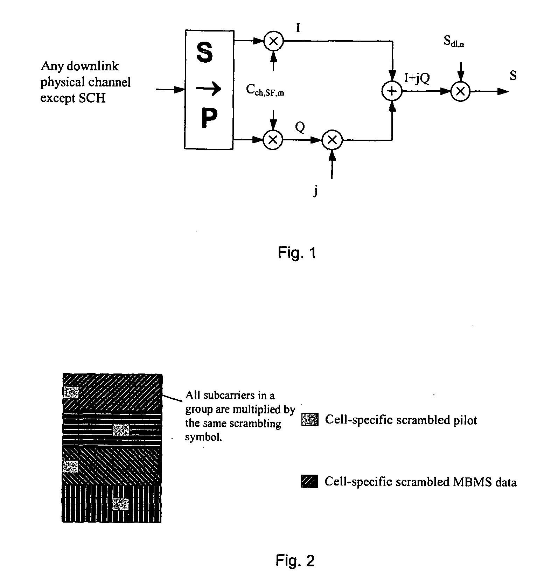

Figure 1 illustrates the spreading operation for all downlink physical channels except Synchronisation Channel (SCH). The Synchronisation Channel (SCH) is a channel used by a base station in a cell to transmit synchronisation code sequences to mobile units in the cell. Physical channels are defined by their carrier frequency, channelization code and relative phase for the uplink connection, which is either 0 or pi/2, corresponding to the In-Phase (I) or Quadrature (Q) component.

Before the spreading operation, values 0, 1, and DTX are mapped to real-valued symbols as follows: the binary value "0" is mapped to the real value +1, the binary value "1" is mapped to the real value -1 and "DTX" is mapped to the real value 0. "DTX" is a symbol that signifies "Discontinuous Transmission". Since no power is emitted for those symbols, "DTX" is mapped to the real value 0.

Each pair of two consecutive real-valued symbols is first serial-to-parallel converted and mapped to an I and Q branch. The mapping is such that even and odd numbered symbols are mapped to the I and Q branch, respectively. The I and Q branches are then both spread to the chip rate by a same real-valued channelization code referred to as $C_{ch,SF,m}$ in Fig. 1. The channelization code sequence shall be aligned in time with the symbol boundary. The sequences of real-valued chips on the I and Q branch are then treated as a single complex-valued sequence of chips referred to as I+jQ in Fig. 1. This sequence of chips I+jQ is then multiplied chip-wise with a complex-valued scrambling code referred to as $S_{dl,n}$ in Fig. 1, thereby obtaining a complex-valued sequence S that is the scrambled sequence of symbols.

In the Long Term Evolution (LTE) research and development work that is underway within 3GPP to further develop the existing UMTS specifications, a scrambling method that may be employed for Multimedia Broadcast/Multicast Services (MBMS) has been proposed in R1-060527, "MBMS Channel Structure for Evolved UTRA", submitted to TSG-RAN WG1 #44 meeting in Denver, USA, 13 - 17 February, 2006 by Toshiba Corporation and NTT DoCoMo. In this document, data symbols transmitted on sub-carriers closest to a transmitted pilot symbol are scrambled using the same scrambling symbol used for scrambling the transmitted pilot symbol. In a scenario where pilot symbols are not transmitted on every sub-carrier of a transmission interval, this scrambling method results in a scrambling symbol that is valid for scrambling a block of raw symbols. A graphical representation of the flat or block-wise scrambling is shown in Fig. 2.

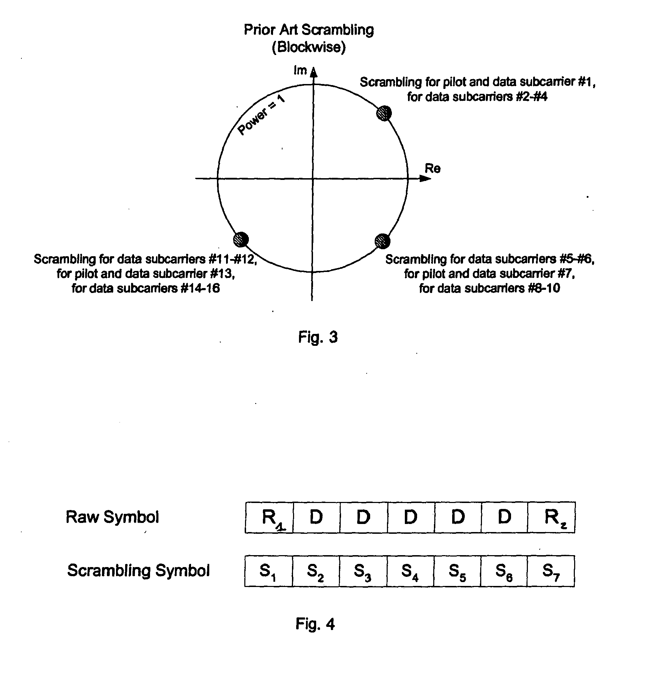

In Fig. 3, a complex plane representation of a block-wise scrambling method according to Figure 2 is shown. A particular example of 16 sub-carriers is taken for illustration purposes only. The scrambling symbol represented in the top right-hand position of the complex circle is the scrambling symbol used for scrambling the pilot and data sub-carrier #1 as well as the data sub-carriers #2 to #4. The scrambling symbol represented in the bottom right-hand position of the complex circle is the scrambling symbol used for scrambling the data sub-carriers #5 and #6, 'pilot and data sub-carrier #7, as well as the data sub-carriers #8 to #10. Finally, the scrambling symbol represented in the bottom left-hand position of the complex circle is the scrambling symbol used for scrambling the data sub-carriers #11 and #12, pilot and data sub-carrier #13, as well as the data sub-carriers #14 to #16. Hence, a same scrambling symbol is used for blocks of data symbols transmitted on sub-carriers closest to a transmitted pilot symbol.

Assuming non-differential modulation schemes, a receiver has to estimate the channel for each transmitted symbol. Particularly in case of identical data that is transmitted from at least two antennas using antenna-specific scrambling sequences, a receiver may not know the resulting scrambling sequence due to the superposition of different radio channel signals and different scrambling sequences. Therefore, the resultant scrambling sequence is a priori unknown to the receiver. Since channel estimation for a specific data symbol is based on the received pilot symbol, it is preferable that the specific data symbol uses the same scrambling symbol as the respective pilot symbol. However, when using a block-wise scrambling method as proposed above, it is not possible to use an interpolation of channel estimates for a data symbol that is transmitted between at least two neighbouring pilot symbols, thus leading to a low level of accuracy in the channel estimation.

Assuming, as mentioned above, that the receiver does not have a-priori knowledge of the received scrambling sequence, the influence of the superposition of different radio channels and different scrambling sequences cannot be distinguished by the receiver.

When a block-wise scrambling method as proposed above is used, discontinuities may be observed between symbols that are contained in different mentioned blocks. This leads to discontinuities in the observed channel response, e.g. in time or frequency domain, which leads to low coherence, e.g. in time or frequency domain. However, a large coherence is desirable, from a resource scheduling point of view, in order to achieve high efficiency of the radio resource usage.

## SUMMARY OF THE INVENTION

The object of the invention is to suggest a scrambling method that allows for improving the accuracy of the channel estimation at a receiver and achieves high radio resource usage efficiency.

The object is solved by the subject matter of the independent claims. Advantageous embodiments of the invention are subject matters of the dependent claims.

According to one embodiment of the invention, the scrambling is not done such that a scrambling symbol is valid for scrambling a block of raw symbols. Instead, the scrambling symbols used for scrambling data symbols and the scrambling symbols used for scrambling reference symbols close to the data symbols are defined such that they follow an interpolation algorithm.

One embodiment of the invention provides a method for scrambling a sequence of symbols comprising at least two reference symbols and at least one first data symbol. The method comprises obtaining a first reference symbol and a second reference symbol, determining a first scrambling symbol corresponding to the first reference symbol and a second scrambling symbol corresponding to the second reference symbol, and obtaining at least one first data symbol comprised in a range from the first reference symbol to the second reference symbol in the sequence of symbols to be transmitted. It further comprises determining a third scrambling symbol corresponding to the at least one first data symbol as an interpolated value of the first scrambling symbol and the second scrambling symbol, and multiplying the first reference symbol with the determined corresponding first scrambling symbol, the second reference symbol with the determined corresponding second scrambling symbol, and the at least one first data symbol with the determined corresponding third scrambling symbol.

In a further embodiment of the invention, the first reference symbol is obtained for a first time instance, the second reference symbol is obtained for a second time instance, the second time instance having a value that is larger than a value of the first time instance, and the at least one first data symbol is obtained for a third time instance having a value that is comprised in a range from the value of the first time instance to the value of the second time instance.

In an alternative embodiment thereof, the first reference symbol is obtained for a first frequency, the second reference symbol is obtained for a second frequency, the second frequency having a value that is larger than a value of the first frequency, and the at least one first data symbol is obtained for a third frequency having a value that is comprised in a range from the value of the first frequency to the value of the second frequency.

In a preferred embodiment of the invention, the third scrambling symbol is determined using a linear interpolation between the first scrambling symbol and the second scrambling symbol.

According to an alternative preferred embodiment of the invention, the third scrambling symbol is determined using an exponential interpolation between the first scrambling symbol and the second scrambling symbol.

According to yet another embodiment of the invention, the method comprises obtaining at least one second data symbol that is not comprised between the first reference symbol and second reference symbol in the sequence of symbols, determining a fourth scrambling symbol corresponding to the at least one second data symbol as an extrapolated value of the first scrambling symbol and the second scrambling symbol, and multiplying the at least one second data symbol with the determined corresponding fourth scrambling symbol.

A further embodiment of the invention provides a method for scrambling a matrix of symbols comprising at least two reference symbols and at least one first data symbol. The method comprises obtaining a first reference symbol and a second reference symbol, determining a first scrambling symbol corresponding to the first reference symbol and a second scrambling symbol corresponding to the second reference symbol, and obtaining at least one first data symbol comprised in a matrix defined by the first reference symbol and second reference symbol within the matrix of symbols. It further comprises determining a third scrambling symbol corresponding to the at least one first data symbol, wherein said third scrambling symbol is determined to be constant for one of a row or column of said first data symbol, and said third scrambling symbol is further determined as an interpolated value between the first scrambling symbol and the second scrambling symbol with respect to the one of the row or column of said first data symbol, and multiplying the first reference symbol with the determined corresponding first scrambling symbol, the second reference symbol with the determined corresponding second scrambling symbol, and the at least one first data symbol with the determined corresponding third scrambling symbol.

According to a preferred embodiment, the third scrambling symbol is determined using a linear interpolation between the first scrambling symbol and the second scrambling symbol.

According to an alternative preferred embodiment, the third scrambling symbol is determined using an exponential interpolation between the first scrambling symbol and the second scrambling symbol.

According to yet another embodiment of the invention, the method comprises obtaining at least one second data symbol that is not comprised in the matrix defined by the first reference symbol and second reference symbol within the matrix of symbols, determining a fourth scrambling symbol corresponding to the at least one second data symbol as an extrapolated value of the first scrambling symbol and the second scrambling symbol with respect to the one of the row or column of said second data symbol, and multiplying the at least one second data symbol with the determined corresponding fourth scrambling symbol.

According to yet another preferred embodiment of the invention, the method further comprises normalising the first scrambling symbol, second scrambling symbol, and at least one third scrambling symbol prior to the step of multiplying, such that an average power of the set of the first scrambling symbol, second scrambling symbol and at least one third scrambling symbol is one.

According to a particularly advantageous embodiment of the invention, the step of determining a third scrambling symbol and normalising are carried out such that a power of at least one of first scrambling symbol and second scrambling symbol is greater than one, and a power of a determined third scrambling symbol that is close to at least one of first scrambling symbol and second scrambling symbol is greater than one, and the power of a determined third scrambling symbol decreases with increasing distance to the closest of the first scrambling symbol and second scrambling symbol.

According to yet another preferred embodiment of the invention, the method further comprises normalising the first scrambling symbol, second scrambling symbol, at least one third scrambling symbol, and at least one fourth scrambling symbol prior to the step of multiplying, such that an average power of the set of the first scrambling symbol, second scrambling symbol, at least one third scrambling symbol and at least one fourth scrambling symbol is one.

A further embodiment of the invention provides a method for scrambling a matrix of symbols comprising at least four reference symbols and at least one first data symbol. The method comprises obtaining a first reference symbol, a second reference symbol, a third reference symbol, and a fourth reference symbol, determining a first scrambling symbol corresponding to the first reference symbol, a second scrambling symbol corresponding to the second reference symbol, a third scrambling symbol corresponding to the third reference symbol and a fourth scrambling symbol corresponding to the fourth reference symbol, and obtaining at least one first data symbol comprised between the first reference symbol, second reference symbol, third reference symbol, and fourth reference symbol in the matrix of symbols. It further comprises determining a fifth scrambling symbol corresponding to the at least one first data symbol as an interpolated value of the first scrambling symbol, second scrambling symbol, third scrambling symbol and fourth scrambling symbol, and multiplying the first reference symbol with the determined corresponding first scrambling symbol, the second reference symbol with the determined corresponding second scrambling symbol, the third reference symbol with the determined corresponding third scrambling symbol, the fourth reference symbol with the determined corresponding fourth scrambling symbol, and the at least one first data symbol with the determined corresponding fifth scrambling symbol.

In a variation of this embodiment, the obtained first reference symbol and second reference symbol are arranged on a same row of the matrix of symbols, the obtained third reference symbol is arranged in a same column of the matrix of symbols as the first reference symbol, and the obtained fourth reference symbol is arranged in a same column of the matrix of symbols as the second reference symbol and on a same row of the matrix of symbols as the third reference symbol, the first reference symbol, second reference symbol, third reference symbol and fourth reference symbol thereby defining a matrix of symbols comprising at least one first data symbol.

In an advantageous embodiment, the first reference symbol is obtained for a first time instance and a first frequency, the second reference symbol is obtained for a second time instance and the first frequency, the third reference symbol is obtained for the first time instance and a second frequency, the fourth reference symbol is obtained for the second time instance and the second frequency, the second time instance having a value that is larger than a value of the first time instance and the second frequency having a value that is larger than a value of the first frequency, and the at least one data symbol is obtained for a third time instance having a value that is comprised in a range from the value of the first time instance to the value of the second time instance, and for a third frequency having a value that is comprised in a range from the value of the first frequency to the value of the second frequency.

According to a preferred embodiment of the invention, the fifth scrambling symbol is determined using a bilinear interpolation between the first scrambling symbol, second scrambling symbol, third scrambling symbol and fourth scrambling symbol.

According to an alternative preferred embodiment of the invention, the fifth scrambling symbol is determined using an exponential interpolation between the first scrambling symbol, second scrambling symbol, third scrambling symbol and fourth scrambling symbol.

In another variation, when the first scrambling symbol and second scrambling symbol are identical, the fifth scrambling symbol corresponding to a first data symbol located on the same row as the first reference symbol in the matrix of symbols is determined as the first scrambling symbol, and the fifth scrambling symbol corresponding to a first data symbol located on a different row than the first reference symbol is determined as an interpolated value between the first scrambling symbol and third scrambling symbol.

According to yet another embodiment of the invention, the method further comprises obtaining at least one second data symbol that is not comprised between the first reference symbol, second reference symbol, third reference symbol, and fourth reference symbol in the matrix of symbols, determining a sixth scrambling symbol corresponding to the at least one second data symbol as an extrapolated value of the first scrambling symbol, second scrambling symbol, third scrambling symbol and fourth scrambling symbol, and multiplying the at least one second data symbol with the determined corresponding sixth scrambling symbol.

According to a preferred embodiment of the invention, the method further comprises normalising the first scrambling symbol, second scrambling symbol, third scrambling symbol, fourth scrambling symbol and at least one fifth scrambling symbol prior to the step of multiplying, such that an average power of the set of the first scrambling symbol, second scrambling symbol, third scrambling symbol, fourth scrambling symbol and at least one fifth scrambling symbol is one.

In a particularly advantageous embodiment, the step of determining a fifth scrambling symbol and normalising are carried out such that a power of at least one of first scrambling symbol, second scrambling symbol, third scrambling symbol and fourth scrambling symbol is greater than one, a power of a determined fifth scrambling symbol that is close to at least one of first scrambling symbol, second scrambling symbol, third scrambling symbol and fourth scrambling symbol is greater than one, and the power of a determined fifth scrambling symbol decreases with increasing distance to the closest of the first scrambling symbol, second scrambling symbol, third scrambling symbol and fourth scrambling symbol.

According to yet another preferred embodiment of the invention, the method further comprises normalising the first scrambling symbol, second scrambling symbol, third scrambling symbol, fourth scrambling symbol, at least one fifth scrambling symbol and at least one sixth scrambling symbol prior to the step of multiplying, such that an average power of the set of the first scrambling symbol, second scrambling symbol, third scrambling symbol, fourth scrambling symbol, at least one fifth scrambling symbol and at least one sixth scrambling symbol is one.

A further embodiment of the invention provides a method for transmitting from a transmitting end to a receiving end a sequence of symbols comprising at least two reference symbols and at least one data symbol. The method comprises obtaining a first reference symbol and a second reference symbol, determining a first scrambling symbol corresponding to the first reference symbol and a second scrambling symbol corresponding to the second reference symbol, and obtaining at least one data symbol comprised in a range from the first reference symbol to the second reference symbol in the sequence of symbols to be transmitted. It further comprises determining a third scrambling symbol corresponding to the at least one data symbol as an interpolated value of the first scrambling symbol and the second scrambling symbol, multiplying the first reference symbol with the determined corresponding first scrambling symbol, the second reference symbol with the determined corresponding second scrambling symbol, and the at least one data symbol with the determined corresponding third scrambling symbol, thereby scrambling the sequence of symbols, and transmitting the scrambled sequence of symbols from the transmitting end to the receiving end.

Another embodiment of the invention provides a method for transmitting from a transmitting end to a receiving end a matrix of symbols comprising at least two reference symbols and at least one data symbol. The method comprises obtaining a first reference symbol and a second reference symbol, determining a first scrambling symbol corresponding to the first reference symbol and a second scrambling symbol corresponding to the second reference symbol, and obtaining at least one data symbol comprised in a matrix defined by the first reference symbol and second reference symbol within the matrix of symbols. It further comprises determining a third scrambling symbol corresponding to the at least one data symbol, wherein said third scrambling symbol is determined to be constant for one of a row or column of said data symbol, and said third scrambling symbol is further determined as an interpolated value between the first scrambling symbol and the second scrambling symbol with respect to the one of the row or column of said data symbol, multiplying the first reference symbol with the determined corresponding first scrambling symbol, the second reference symbol with the determined corresponding second scrambling symbol, and the at least one data symbol with the determined corresponding third scrambling symbol, thereby scrambling the matrix of symbols, and transmitting the scrambled matrix of symbols from the transmitting end to the receiving end.

Yet another embodiment of the invention provides a method for transmitting from a transmitting end to a receiving end a matrix of symbols comprising at least four reference symbols and at least one data symbol. The method comprises obtaining a first reference symbol, a second reference symbol, a third reference symbol, and a fourth reference symbol, determining a first scrambling symbol corresponding to the first reference symbol, a second scrambling symbol corresponding to the second reference symbol, a third scrambling symbol corresponding to the third reference symbol and a fourth scrambling symbol corresponding to the fourth reference symbol, and obtaining at least one data symbol comprised between the first reference symbol, second reference symbol, third reference symbol, and fourth reference symbol in the matrix of symbols. It further comprises determining a fifth scrambling symbol corresponding to the at least one data symbol as an interpolated value of the first scrambling symbol, second scrambling symbol, third scrambling symbol and fourth scrambling symbol, multiplying the first reference symbol with the determined corresponding first scrambling symbol, the second reference symbol with the determined corresponding second scrambling symbol, the third reference symbol with the determined corresponding third scrambling symbol, the fourth reference symbol with the determined corresponding fourth scrambling symbol, and the at least one data symbol with the determined corresponding fifth scrambling symbol, thereby scrambling the matrix of symbols, and transmitting the scrambled matrix of symbols from the transmitting end to the receiving end.

According to a variation, the method further comprises sending to the receiving end information on an interpolation type used for determining a scrambling symbol corresponding to the at least one data symbol.

According to a further variation, the method further comprises the equivalence of a pilot symbol as at least one of a first reference symbol, second reference symbol, third reference symbol, or fourth reference symbol.

A further embodiment of the invention provides an apparatus for scrambling a sequence of symbols comprising at least two reference symbols and at least one first data symbol. Such an apparatus comprising obtaining means for obtaining a first reference symbol and a second reference symbol, determining means for determining a first scrambling symbol corresponding to the first reference symbol and a second scrambling symbol corresponding to the second reference symbol, wherein said obtaining means are adapted to obtain at least one first data symbol comprised in a range from the first reference symbol to the second reference symbol in the sequence of symbols to be transmitted. Said determining means are adapted to determine a third scrambling symbol corresponding to the at least one first data symbol as an interpolated value of the first scrambling symbol and the second scrambling symbol, and said apparatus further comprises multiplying means for multiplying the first reference symbol with the determined corresponding first scrambling symbol, the second reference symbol with the determined corresponding second scrambling symbol, and the at least one first data symbol with the determined corresponding third scrambling symbol.

A further embodiment of the invention provides an apparatus for scrambling a matrix of symbols comprising at least two reference symbols and at least one first data symbol. Such an apparatus comprises obtaining means for obtaining a first reference symbol and a second reference symbol, determining means for determining a first scrambling symbol corresponding to the first reference symbol and a second scrambling symbol corresponding to the second reference symbol, wherein said obtaining means are adapted to obtain at least one first data symbol comprised in a matrix defined by the first reference symbol and second reference symbol within the matrix of symbols. Said determining means are adapted to determine a third scrambling symbol corresponding to the at least one first data symbol, wherein said third scrambling symbol is determined to be constant for one of a row or column of said first data symbol, and said third scrambling symbol is further determined as an interpolated value between the first scrambling symbol and the second scrambling symbol with respect to the one of the row or column of said first data symbol, and said apparatus further comprises multiplying means for multiplying the first reference symbol with the determined corresponding first scrambling symbol, the second reference symbol with the determined corresponding second scrambling symbol, and the at least one first data symbol with the determined corresponding third scrambling symbol.

Yet a further embodiment of the invention provides an apparatus for scrambling a matrix of symbols comprising at least four reference symbols and at least one first data symbol. Such an apparatus comprises obtaining means for obtaining a first reference symbol, a second reference symbol, a third reference symbol, and a fourth reference symbol, determining means for determining a first scrambling symbol corresponding to the first reference symbol, a second scrambling symbol corresponding to the second reference symbol, a third scrambling symbol corresponding to the third reference symbol and a fourth scrambling symbol corresponding to the fourth reference symbol, wherein said obtaining means are adapted to obtain at least one first data symbol between the first reference symbol, second reference symbol, third reference symbol, and fourth reference symbol. Said determining means are adapted to determine a fifth scrambling symbol corresponding to the at least one first data symbol as an interpolated value of the first scrambling symbol, second scrambling symbol, third scrambling symbol and fourth scrambling symbol, and said apparatus further comprises multiplying means for multiplying the first reference symbol with the determined corresponding first scrambling symbol, the second reference symbol with the determined corresponding second scrambling symbol, the third reference symbol with the determined corresponding third scrambling symbol, the fourth reference symbol with the determined corresponding fourth scrambling symbol, and the at least one first data symbol with the determined corresponding fifth scrambling symbol.

The apparatus for scrambling a sequence of symbols and apparatuses for scrambling a matrix of symbols above may comprise further means adapted to, respectively, perform the method for scrambling a sequence of symbols and for scrambling a matrix of symbols according to one of the various embodiments of the invention and variations described above.

Another embodiment of the invention provides an apparatus for transmitting to a receiving end a sequence of symbols comprising at least two reference symbols and at least one data symbol. Such apparatus comprises obtaining means for obtaining a first reference symbol and a second reference symbol, determining means for determining a first scrambling symbol corresponding to the first reference symbol and a second scrambling symbol corresponding to the second reference symbol, wherein said obtaining means are adapted to obtain at least one first data symbol comprised in a range from the first reference symbol to the second reference symbol in the sequence of symbols to be transmitted. Said determining means are adapted to determine a third scrambling symbol corresponding to the at least one first data symbol as an interpolated value of the first scrambling symbol and the second scrambling symbol, and said apparatus further comprises multiplying means for multiplying the first reference symbol with the determined corresponding first scrambling symbol, the second reference symbol with the determined corresponding second scrambling symbol, and the at least one first data symbol with the determined corresponding third scrambling symbol, thereby scrambling the sequence of symbols, and transmitting means for transmitting the scrambled sequence of symbols to the receiving end.

A further embodiment of the invention provides an apparatus for transmitting to a receiving end a matrix of symbols comprising at least two reference symbols and at least one first data symbol. Said apparatus comprises obtaining means for obtaining a first reference symbol and a second reference symbol, determining means for determining a first scrambling symbol corresponding to the first reference symbol and a second scrambling symbol corresponding to the second reference symbol, wherein said obtaining means are adapted to obtain at least one first data symbol comprised in a matrix defined by the first reference symbol and second reference symbol within the matrix of symbols. Said determining means are adapted to determine a third scrambling symbol corresponding to the at least one first data symbol, wherein said third scrambling symbol is determined to be constant for one of a row or column of said first data symbol, and said third scrambling symbol is further determined as an interpolated value between the first scrambling symbol and the second scrambling symbol with respect to the one of the row or column of said first data symbol. Said apparatus further comprises multiplying means for multiplying the first reference symbol with the determined corresponding first scrambling symbol, the second reference symbol with the determined corresponding second scrambling symbol, and the at least one first data symbol with the determined corresponding third scrambling symbol, thereby scrambling the matrix of symbols, and transmitting means for transmitting the scrambled matrix of symbols to the receiving end.

Yet another embodiment of the invention provides an apparatus for transmitting to a receiving end a matrix of symbols comprising at least four reference symbols and at least one data symbol. Said apparatus comprises obtaining means for obtaining a first reference symbol, a second reference symbol, a third reference symbol, and a fourth reference symbol, determining means for determining a first scrambling symbol corresponding to the first reference symbol, a second scrambling symbol corresponding to the second reference symbol, a third scrambling symbol corresponding to the third reference symbol and a fourth scrambling symbol corresponding to the fourth reference symbol, wherein said obtaining means are adapted to obtain at least one first data symbol comprised between the first reference symbol, second reference symbol, third reference symbol, and fourth reference symbol. Said determining means are adapted to determine a fifth scrambling symbol corresponding to the at least one first data symbol as an interpolated value of the first scrambling symbol, second scrambling symbol, third scrambling symbol and fourth scrambling symbol, and said apparatus further comprises multiplying means for multiplying the first reference symbol with the determined corresponding first scrambling symbol, the second reference symbol with the determined corresponding second scrambling symbol, the third reference symbol with the determined corresponding third scrambling symbol, the fourth reference symbol with the determined corresponding fourth scrambling symbol, and the at least one first data symbol with the determined corresponding fifth scrambling symbol, thereby scrambling the matrix of symbols, and transmitting means for transmitting the scrambled matrix of symbols to the receiving end.

## BRIEF DESCRIPTION OF THE FIGURES

In the following, the invention is described in more detail in reference to the attached figures and drawings. Similar or corresponding details in the figures are marked with the same reference numerals.

**Figure 1**    shows a block diagram of scrambling as employed in UMTS;

**Figure 2**    shows a prior art block-wise scrambling method for OFDM MBMS transmission;

**Figure 3**    shows a complex plane representation of the block-wise scrambling method represented in Figure 2;

**Figure 4**    shows a one-dimensional array arrangement of raw reference and data symbols and their corresponding scrambling symbols;

**Figure 5**    shows a complex plane representation of scrambling symbols interpolated using linear interpolation between two scrambling symbols that have a power of one according to one embodiment of the invention;

**Figure 6**    shows a complex plane representation of scrambling symbols interpolated using exponential interpolation between two scrambling symbols according to another embodiment of the invention;

**Figure 7**    shows a complex plane representation of scrambling symbols interpolated using linear interpolation between two scrambling symbols and with power normalisation according to one embodiment of the invention;

**Figure 8**    shows a two-dimensional grid arrangement, e.g. in OFDM, of raw reference and data symbols and their corresponding scrambling symbols according to one embodiment of the invention;

**Figure 9**    shows a two-dimensional structure of data and reference symbols with an irregular arrangement of reference symbols and a step-wise linear interpolation;

**Figure 10**   shows a scrambling method for OFDM MBMS transmission using an interpolation method according to one embodiment of the invention;

**Figure 11**   shows an extrapolation of the scrambling sequence beyond the reference scrambling symbols for a one-dimensional symbol arrangement according to another embodiment of the invention;

**Figure 12**   shows an example of a two-dimensional symbol structure and one-dimensional interpolation of the corresponding scrambling symbols according to another embodiment of the invention.

## DETAILED DESCRIPTION OF THE INVENTION

The following paragraphs will describe various embodiments of the invention. Before discussing the different exemplary embodiments of the invention, some definitions of terms are provided in the following.

The term *scrambling* will be used to refer to a complex multiplication of a raw symbol, i.e. an unscrambled symbol, which can be a reference symbol or a data symbol, with a scrambling symbol to obtain a transmission symbol. As illustrated in Fig. 1, the raw symbol is represented as the complex number I+jQ, the scrambling symbol is represented as the complex number $S_{dl,n}$, and the generated transmission symbol is represented as the complex number S.

A *reference symbol* is defined herein as a symbol for which the scrambling symbols are known. In particular, reference symbols may be pilot signals, but are not limited thereto.

The main point of the invention is that scrambling symbols for data symbols is related to the scrambling symbols for reference symbols in such a manner that the scrambling symbols for data symbols are determined as interpolated values of the scrambling symbols of neighbouring reference symbols. Details thereto will be disclosed in the following.

A first embodiment of the invention is directed to a situation where the transmitted symbols are arranged according to a one-dimensional pattern. While the transmitted symbols are arranged according to a one-dimensional pattern, the interpolated complex symbols may be represented in the complex plane, which is a two-dimensional representation, as in e.g. Figs. 3, 5, 6 and 7.

There are several possibilities of arranging transmission symbols according to a one-dimensional arrangement. A first possibility is when transmission symbols are arranged in a sequence of symbols with respect to time and are transmitted using a single frequency carrier. Another possibility is when transmission symbols are arranged in a sequence of symbols with respect to frequency and are transmitted at a single predetermined time instance.

As illustration purposes of the first embodiment of the invention, the case where transmission symbols are arranged as a one-dimensional array in a sequence of symbols with respect to time using a single frequency carrier will be described in detail. This description shall however not be intended to limit the principles and ideas of the invention to such situation.

As illustrated in Fig. 4, the reference and data symbols are arranged as a one-dimensional array in a sequence of symbols with respect to time using a single frequency carrier. It is straightforward to assume that an arbitrary integer number $N_d$ of data symbols D is surrounded by one respective reference symbol $R_1$, $R_2$ at each end of the sequence of symbols. In Fig. 4, an example is shown where $R_1$, $R_2$ denote reference symbols and D denotes a data symbol. In the exemplary representation of Fig. 4, it is apparent that $N_d$ is chosen to be equal to 5.

Assuming that the scrambling symbol for those reference symbols $R_1$, $R_2$ are denoted as $S_1$ and $S_{Nd+2}$, a linear interpolation to obtain the scrambling symbol $S_x$ for a data symbol D comprised in a range from the first reference symbol $R_1$ to the second reference symbol $R_2$ in the sequence of symbols to be transmitted can be obtained as:

$$S_x = S_1 + (x-1) \cdot \frac{S_{N_d+2} - S_1}{N_d + 1} \quad 1 \le x \le N_d + 2 \tag{1}$$

In Fig. 4, in the case of $N_d$ being chosen to be equal to 5, the respective scrambling symbols $S_2$ to $S_6$ for the data symbols D comprised between the reference symbols $R_1$, $R_2$ are thus determined as interpolated values of the respective scrambling symbols $S_1$ and $S_7$ for the reference symbols.

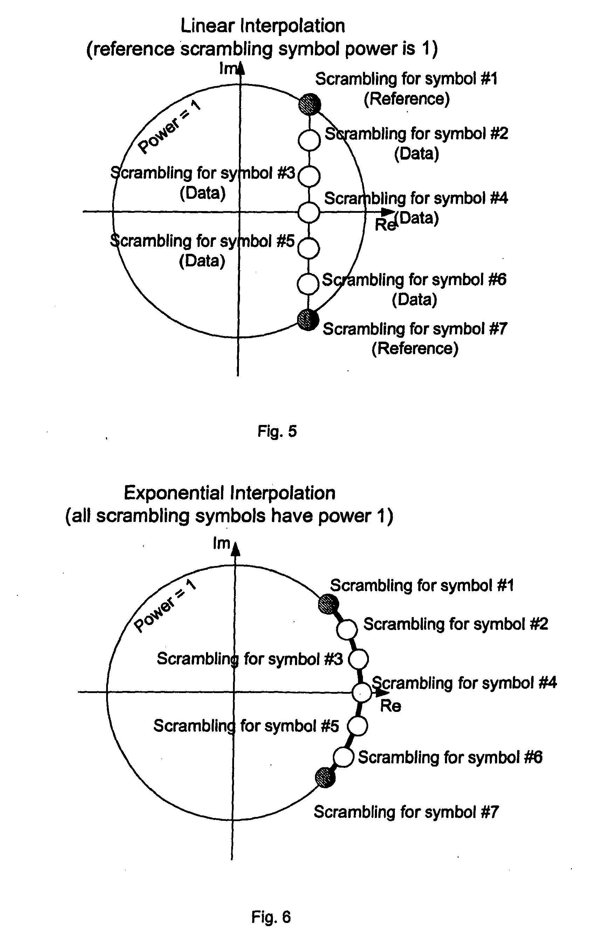

A graphical representation in the complex plane of such linear interpolation is shown in Fig. 5. The scrambling symbols for the reference symbols $R_1$, $R_2$ shown in Fig. 4 are represented as the scrambling symbols for symbol #1 and symbol #7, respectively. The scrambling symbols for the reference symbols $R_1$, $R_2$ are chosen to have a unitary power of 1, and are thus arranged on the complex circle having a radius of 1. The scrambling symbols for the data symbols #2, #3, #4, #5 and #6 are determined as linearly interpolated values of the scrambling symbols for the reference symbols $R_1$, $R_2$. As shown in Fig. 5, the respective scrambling symbols for the data symbols #2, #3, #4, #5 and #6 are arranged along a line joining the respective scrambling symbols for the reference symbols $R_1$, $R_2$, the arrangement along the line being determined according to a linear interpolation method.

The scrambling symbol is represented as a complex symbol $S_x$ that is given by the following equation:

$$S_x = \mathrm{Re}\{S_x\} + j \cdot \mathrm{Im}\{S_x\} = \sqrt{P(S_x)} \cdot e^{j\varphi(S_x)} \tag{2}$$

where $S_x$ is the scrambling symbol, Re{} is the real part, Im{} is the imaginary part, and $P(S_x)$ is the power of $S_x$.

Whereas the above mentioned linear interpolation is applied to complex values, which can also be interpreted as linearly interpolating between the real values and imaginary values of first and second reference symbols separately, a further linear interpolation method may be used for determining a scrambling symbol $S_x$ corresponding to a data symbol comprised in a range from the first reference symbol $R_1$ (symbol #1) to the second reference symbol $R_2$ (symbol #7).

In this further method, the scrambling symbol $S_x$ for the respective data symbols #2 to #6 is determined such that its power is obtained by a linear interpolation between the respective power of the scrambling symbol of reference symbol #1 and reference symbol #7, and such that its angle is obtained by a linear interpolation between the respective angle of the scrambling symbol of reference symbol #1 and scrambling symbol #7.

Alternatively to the use of a linear interpolation method, a scrambling symbol corresponding to a data symbol comprised in a range from the first reference symbol $R_1$ to the second reference symbol $R_2$ in the sequence of symbols to be transmitted may also be determined using an exponential interpolation method, as illustrated in Fig. 6. The scrambling symbols for the reference symbols $R_1$, $R_2$ shown in Fig. 4 are represented as the scrambling symbols for symbol #1 and symbol #7, respectively. The scrambling symbols for the reference symbols $R_1$, $R_2$ are also chosen to have a unitary power of 1. Since the power of the reference scrambling symbols $R_1$, $R_2$ is equal to one, the power of all scrambling symbols obtained by the exponential interpolation rule is also one as all the interpolated scrambling symbols remain on the unitary complex circle having a radius of 1.

Even though the use of a linear and exponential interpolation for determining a scrambling symbol $S_x$ corresponding to a data symbol comprised in a range from the first reference symbol $R_1$ to the second reference symbol $R_2$ have been described in more detail, it should be apparent to a person skilled in the art that other interpolation methods, such as e.g. a cubic, or higher degree polynomial, or spline interpolation can also be implemented.

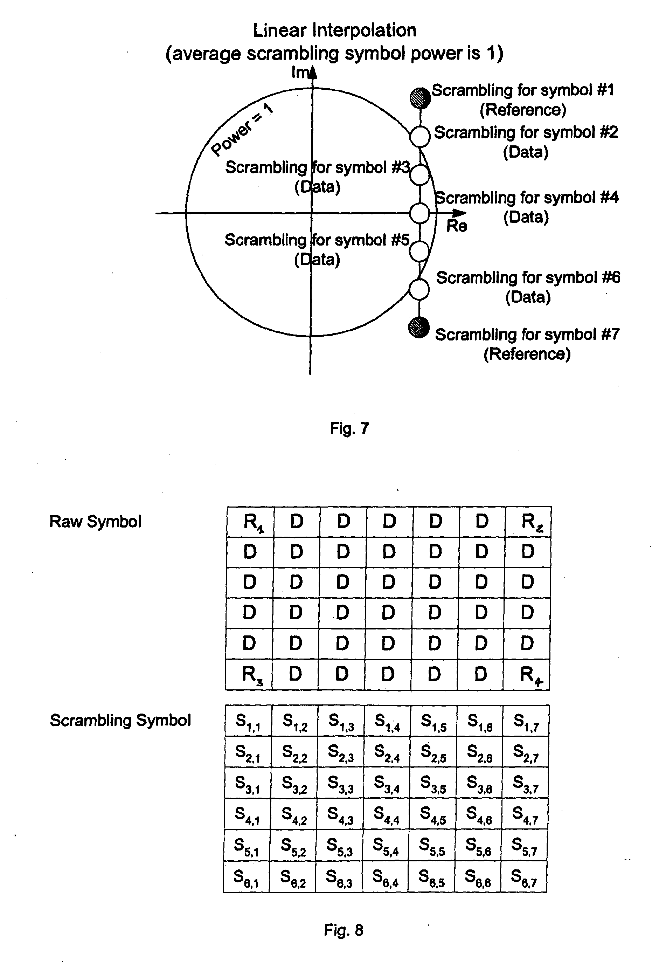

If the power for the reference scrambling symbols $R_1$, $R_2$ is one, then the average power for the scrambling sequence that results from e.g. linear interpolation may be smaller than one. In such a case, the scrambling sequence, i.e. the set of the scrambling symbol $S_1$ corresponding to the reference symbol $R_1$, second scrambling symbol $S_7$ corresponding to the reference symbol $R_2$ and at least one scrambling symbol $S_x$ should be normalised to an average power of one. This provides the advantage that the raw data symbols that are very close to a reference symbol are amplified, so that for a receiver the channel estimation for data symbols close to reference symbols is generally more reliable. Therefore, the power spent in such data symbols is used more efficiently. The effect of such a normalisation procedure on the scrambling sequence is represented in the case of linear interpolation comparing Figure 5 to Figure 7. The arrangement of scrambling symbols in Figure 5 represents a case without normalisation. Applying normalisation results in an arrangement as shown in Figure 7. The scrambling symbols for reference symbols #1 and #7 and for respective adjacent data symbols #2 and #6 have a power greater than 1, and therefore those scrambled reference and data symbols are transmitted with a higher power.

A second embodiment of the invention is directed to a situation where the transmitted symbols are arranged according to a two-dimensional pattern. The transmitted symbols are arranged according to a two-dimensional pattern and the interpolated complex symbols may be represented in the complex plane, which is a two-dimensional representation, as in e.g. Figs. 3, 5, 6 and 7.

This embodiment is particularly directed to the case of the transmission of symbols in multi-carrier systems. Indeed, in such systems, it is generally assumed that transmission symbols are arranged in a two-dimensional time-frequency matrix, as shown in Figure 8.

The reference and data symbols are arranged in a matrix of symbols, wherein an integer number of data symbols D is comprised between 4 reference symbols $R_1$, $R_2$, $R_3$, $R_4$ thus forming a matrix of symbols having N1 rows and N2 columns. The scrambling symbols are denoted by $S_{r,c}$ with r referring to a row and c to a column of the matrix of symbols to be transmitted. It is evident that generally the spacing of reference symbols in rows and columns does not have to be identical. In Fig. 8, for example, the reference row spacing is 5, and the reference column spacing is 6, so that N1 is equal to 6 and N2 equal to 7.

According to an embodiment of the invention, the respective scrambling symbol $S_{r,c}$ for a data symbol $D_{r,c}$ comprised between the reference symbols $R_1$, $R_2$, $R_3$, $R_4$ is determined as an interpolated value of the respective scrambling symbols $S_{1,1}$, $S_{1,N2}$, $S_{N1,1}$, and $S_{N1,N2}$ for the reference symbols $R_1$, $R_2$, $R_3$, $R_4$. Although different interpolation methods may be used, the particular case of a bilinear interpolation will be described in more detail in the following.

Assuming that the scrambling symbol for those reference symbols $R_1$, $R_2$, $R_3$, $R_4$ are respectively denoted as $S_{1,1}$, $S_{1,N2}$, $S_{N1,1}$, and $S_{N1,N2}$, a bilinear interpolation to obtain the scrambling symbol $S_{r,c}$ for a data symbol $D_{r,c}$ comprised between the reference symbols $R_1$, $R_2$, $R_3$, $R_4$ in the sequence of symbols can be obtained as:

$$t = \frac{r-1}{N1-1} \quad 1 \leq r \leq N1$$

$$u = \frac{c-1}{N2-1} \quad 1 \leq c \leq N2 \quad\quad (3)$$

$$S_{r,c} = (1-t)\cdot(1-u)\cdot S_{1,1} + t\cdot(1-u)\cdot S_{N1,1} + u\cdot(1-t)\cdot S_{1,N2} + t\cdot u\cdot S_{N1,N2}$$

Apparently, for r and c values corresponding to the reference symbol positions, e.g. r=1 and c=1, the resultant $S_{r,c}$ value is not used for a data symbol, but for a reference symbol. Those skilled in the art will recognise that nevertheless the resultant $S_{r,c}$ from the above formula gives the same value as the reference scrambling symbols defined above.

Even though the use of a bilinear interpolation for determining a scrambling symbol $S_{r,c}$ corresponding to a data symbol $D_{r,c}$ comprised between the reference symbols $R_1$, $R_2$, $R_3$, $R_4$ has been described in more detail, it should be apparent to a person skilled in the art that other interpolation methods, such as e.g. an exponential, cubic, higher degree polynomial, or spline interpolation can also be implemented.

According to a preferred embodiment of the invention, the scrambling symbols are preferably normalised such that the average power of the scrambling symbols is one. The scrambling symbols $S_{1,1}$, $S_{1,N2}$, $S_{N1,1}$, and $S_{N1,N2}$ corresponding to the reference symbols $R_1$, $R_2$, $R_3$, $R_4$ and the at least one scrambling symbol $S_{r,c}$ corresponding to at least one data symbol are normalised prior to scrambling, such that an average power of the set of the scrambling symbols $S_{1,1}$, $S_{1,N2}$, $S_{N1,1}$, and $S_{N1,N2}$ and at least one scrambling symbol $S_{r,c}$ is one.

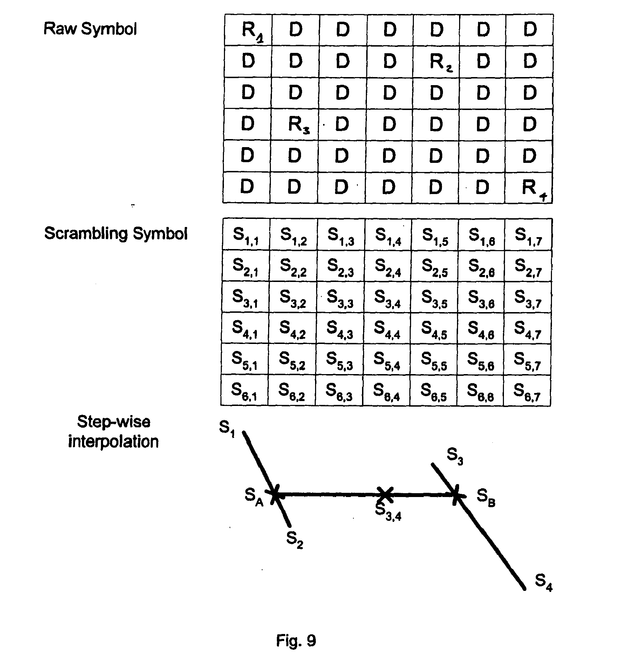

In the following, the determination of the respective scrambling symbol $S_{r,c}$ for a data symbol $D_{r,c}$ comprised between the reference symbols $R_1$, $R_2$, $R_3$, $R_4$, wherein the reference symbols $R_1$, $R_2$, $R_3$, $R_4$ are arranged in an irregular manner within the matrix of symbols, will be described. An example thereof is shown in Fig. 9.

The bilinear interpolation formula (3) given above cannot be used directly in the case where the reference symbols $R_1$, $R_2$, $R_3$, $R_4$ are arranged in an irregular manner within the matrix of symbols. According to this embodiment of the invention, a first auxiliary scrambling symbol $S_A$ is determined as a linearly interpolated value of the scrambling symbols $S_1$ and $S_2$ corresponding to the reference symbols $R_1$ and $R_2$, and a second auxiliary scrambling symbol $S_B$ is determined as a linearly interpolated value of the scrambling symbols $S_3$ and $S_4$ corresponding to the reference symbols $R_3$ and $R_4$. The two linearly interpolated auxiliary scrambling symbols $S_A$ and $S_B$ are subsequently used for a second linear interpolation to obtain scrambling symbol $S_{r,c}$ for the data symbol $D_{r,c}$ comprised between the reference symbols $R_1$, $R_2$, $R_3$, $R_4$.

It may be noted that generally the row and column parameters for auxiliary scrambling symbols $S_A$ and $S_B$ are real values. In the particular example shown in Fig. 9, the row and column parameters for auxiliary scrambling symbol $S_A$ would be $(r_A ; c_A)=(3 ; 5/3)$ and for auxiliary scrambling symbol $S_B$ $(r_B ; c_B)=(3 ; 5,5)$. A general formula for the auxiliary scrambling symbols gives:

$$S_A = S_1 + (S_2 - S_1) \cdot \sqrt{\frac{(r_A - r_1)^2 + (c_A - c_1)^2}{(r_2 - r_1)^2 + (c_2 - c_1)^2}}$$

$$S_B = S_3 + (S_4 - S_3) \cdot \sqrt{\frac{(r_B - r_3)^2 + (c_B - c_3)^2}{(r_4 - r_3)^2 + (c_4 - c_3)^2}}$$

$$(4)$$

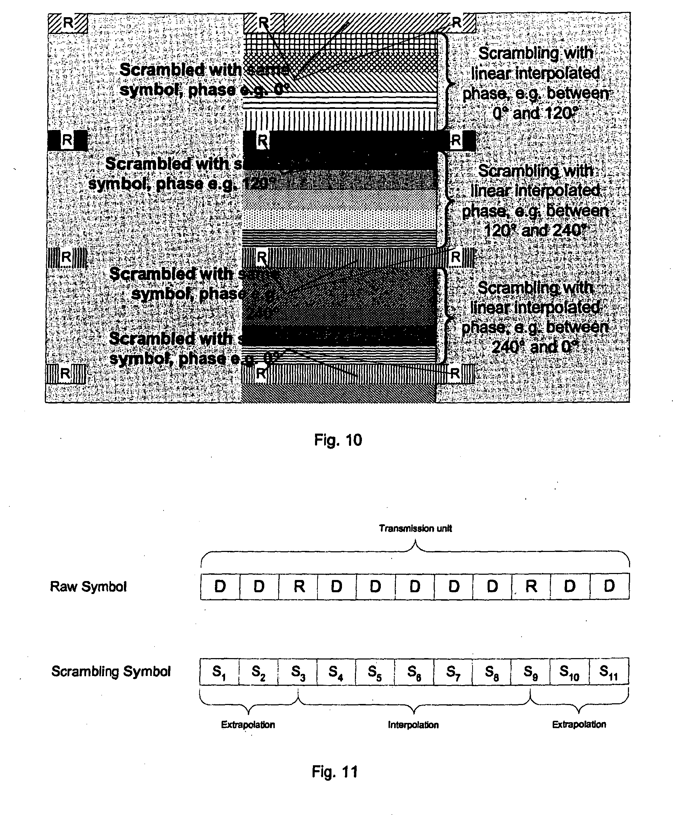

According to another embodiment of the invention, in case the scrambling symbol for reference symbols changes only in one dimension of the two-dimensional array, interpolation is performed only in that one dimension. An example is shown in Fig. 10, where symbols are transmitted in a two-dimensional array, but the scrambling symbol changes only in one dimension, as represented by the hatched areas which depend only on the vertical direction and not on the horizontal direction of Fig. 10. Therefore, according to this embodiment of the invention, the same scrambling symbol is applied to all data symbols in the horizontal dimension, but the scrambling symbol of the data symbols varies according to the vertical direction and is determined as an interpolated value of the scrambling symbols corresponding to the reference symbols. In the example shown in Fig. 10, the phase of the scrambling symbol of the data symbols is interpolated in the vertical dimension. This is for example applicable in an Orthogonal Frequency Division Multiplexing (OFDM) system where only one reference symbol per transmission interval is sent and the scrambling symbol does not change between transmission intervals.

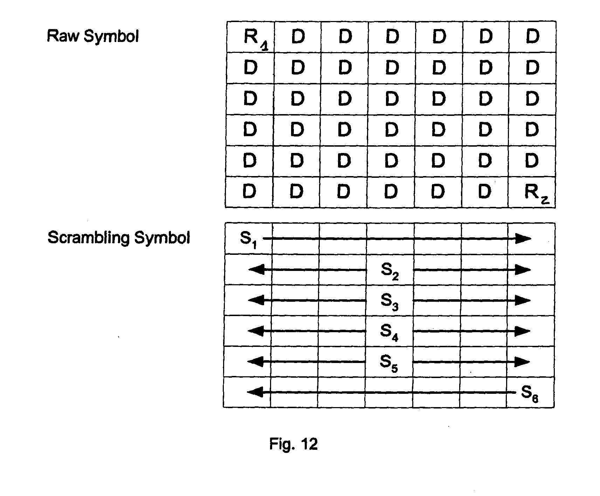

Another embodiment of the invention describes the case where the scrambling symbol for reference symbols changes only in one dimension of the two-dimensional array, and the data symbols are comprised in a matrix defined by only two reference symbols $R_1$, $R_2$. This is illustrated in Fig. 12 where only two reference scrambling symbols $S_1$ and $S_6$, corresponding respectively to the reference symbols $R_1$, $R_2$, are given, which are valid for the first and sixth row of the matrix respectively. The scrambling symbol for a data symbol does not depend on the column of the data symbol in this case, but only on the row of the data symbol. The data symbols arranged on a same row therefore have a same scrambling symbol $S_2$ to $S_5$, which is obtained by interpolation between the reference scrambling symbols $R_1$, $R_2$ only with respect to the row.

Alternatively, the scrambling symbol for a data symbol may also not depend on the row of the data symbol, but only on the column of the data symbol. The data symbols arranged on a same column therefore have a same scrambling symbol, which is obtained by interpolation between the reference scrambling symbols $R_1$, $R_2$ only with respect to the column.

According to another embodiment of the invention, in a multi-antenna scenario, the scrambling sequences between the antennas may not be identical, i.e. may be antenna-specific. This may be employed by using sequences that have little or no correlation, or by using sequences that show high correlation for a certain shift. For example, the scrambling sequences for two antennas may be essentially identical, with a length or periodicity of n scrambling symbols, however the scrambling sequence used by the first antenna is cyclically shifted from the one used by the second antenna by a number of 0<m<n symbols.

In another embodiment of the invention, particularly in case the scrambling sequence is interpolated not in a multi-antenna environment, the receiver may be informed about the interpolation method used by the transmitter, either explicitly by signalling or implicitly by determining a parameter that is dependent on the interpolation method. An example of such a parameter is the reference symbol spacing. If the reference position is signalled or known to the receiver, and the interpolation method is set to a linear one for a reference symbol spacing of 6 and to an exponential one for a reference symbol spacing of 3 by the system specification, the receiver can conclude on the interpolation method from the signalled reference symbol spacing parameter. Alternatively, the interpolation method can be a fixed setting for the communication system, such that the receiver knows it a priori without implicit or explicit signalling.

According to another embodiment of the invention, the scrambling sequences are not identical in a given interval for a multiple-antenna scenario where the antennas transmit identical raw symbols in said given interval. This is for example applicable in a single-frequency network environment for MBMS data as it is currently discussed for mobile communication systems of the third generation and beyond. In such cases, it may also be preferable to employ scrambling sequences that have little or no correlation between antennas. For an observed flat channel, it may otherwise occur that a wide consecutive range of received symbols suffers tremendously from signal fading. If on the other hand, the scrambling sequences are uncorrelated, for two adjacent received symbols the observed channel will be different. Therefore the probability of deep signal fading over a wide range of symbols is greatly reduced.

According to a preferred embodiment of the invention, the determination of a scrambling symbol corresponding to a data symbol uses a linear or exponential interpolation method between reference symbols, as outlined above, when it is safe to assume that the mobile channel is sufficiently flat in the interval between two reference symbols.

As it will be apparent to a person skilled in the art, an additional advantage provided by the various embodiments of the present invention is that the coherence of the received channel is increased. Considering the case where several data symbols are transmitted on frequencies between reference symbols, as for example in Fig. 4 where the horizontal axis represents frequencies, or sub-carriers in a multi-carrier system, the radio channel exhibits a certain coherence bandwidth over which it can be assumed to be reasonably flat. A receiver that does not know about the exact scrambling sequence of the received signal cannot distinguish between a modification of the signal due to the radio channel, i.e. a channel coefficient, and a modification due to the scrambling sequence. This may be particularly applicable in a multi-antenna or multi-cell single frequency network setup where identical raw data is transmitted, but different antenna-specific or cell-specific scrambling sequences are used. If the coherence bandwidth of the radio channel is large, but the coherence bandwidth of the scrambling sequence is small, the receiver will observe only the combined effect of a small coherence bandwidth. The method according to the various embodiments of the invention allows to avoid the large discontinuities across block borders observed when performing block-wise scrambling according to conventional systems, as illustrated in Figs. 2 and 3. Further, the method according to the various embodiments of the invention allows to increase the coherence bandwidth of the scrambling sequence. The discontinuities are reduced or removed by using the interpolation method according to embodiments of the invention, and therefore the coherence bandwidth of the scrambling sequence is increased.

It should be obvious to those skilled in the art that the scrambling sequence may also be extrapolated beyond surrounding reference scrambling symbols if necessary. This may be particularly applicable in case where the reference symbols are not arranged such that they encompass all data symbols. In Fig. 11, the reference scrambling symbols are denoted by $S_3$ and $S_9$. Scrambling symbols $S_3$ to $S_9$ follow an interpolation as outlined previously, while scrambling symbols $S_1$ to $S_3$ and $S_9$ to $S_{11}$ follow an extrapolation with respect to $S_3$ and $S_9$ respectively. This extrapolation may result in a flat relation, i.e. such that in the figure $S_1=S_2=S_3$ or $S_9=S_{10}=S_{11}$, or it may be a continuation of the adjacent interpolation, i.e. such that the scrambling symbols $S_1$ to $S_9$ or $S_3$ to $S_{11}$ fulfil the interpolation relation as outlined previously. It should further be obvious to those skilled in the art that power normalisation in such an extrapolation case is preferably carried out for the set of reference scrambling symbols, interpolated scrambling symbols, and extrapolated scrambling symbols.

It should be obvious to those skilled in the art that interpolation using a polynomial of an order higher than one, i.e. quadratic or of higher order, requires additional reference scrambling symbols to compute the polynomial coefficients for interpolation.

Another embodiment of the invention relates to the implementation of the above described various embodiments using hardware and software. It is recognized that the various embodiments of the invention above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

**Claims**

1. A method for scrambling a sequence of symbols comprising at least two reference symbols ($R_1$, $R_2$) and at least one first data symbol (D), said method comprising the following steps:

   obtaining a first reference symbol ($R_1$) and a second reference symbol ($R_2$),
   determining a first scrambling symbol ($S_1$) corresponding to the first reference symbol ($R_1$) and a second scrambling symbol ($S_7$) corresponding to the second reference symbol ($P_2$),
   obtaining at least one first data symbol (D) comprised in a range from the first reference symbol ($R_1$) to the second reference symbol ($R_2$) in the sequence of symbols to be transmitted,
   determining a third scrambling symbol ($S_x$) corresponding to the at least one first data symbol (D) as an interpolated value of the first scrambling symbol ($S_1$) and the second scrambling symbol ($S_7$), and
   multiplying the first reference symbol ($R_1$) with the determined corresponding first scrambling symbol ($S_1$), the second reference symbol ($R_2$) with the determined corresponding second scrambling symbol ($S_7$), and the at least one first data symbol (D) with the determined corresponding third scrambling symbol ($S_x$).

2. The method according to claim 1, wherein the first reference symbol ($R_1$) is obtained for a first time instance, the second reference symbol ($R_2$) is obtained for a second time instance, the second time instance having a value that is larger than a value of the first time instance, and the at least one first data symbol (D) is obtained for a third time instance having a value that is comprised in a range from the value of the first time instance to the value of the second time instance.

3. The method according to claim 1, wherein the first reference symbol ($R_1$) is obtained for a first frequency, the second reference symbol ($R_2$) is obtained for a second frequency, the second frequency having a value that is larger than a value of the first frequency, and the at least one first data symbol (D) is obtained for a third frequency having a value that is comprised in a range from the value of the first frequency to the value of the second frequency.

4. The method according to one of claims 1 to 3, wherein the third scrambling symbol ($S_x$) is determined using a linear interpolation between the first scrambling symbol ($S_1$) and the second scrambling symbol ($S_7$).

5. The method according to one of claims 1 to 3, wherein the third scrambling symbol ($S_x$) is determined using an exponential interpolation between the first scrambling symbol ($S_1$) and the second scrambling symbol ($S_7$).

6. The method according to one of claims 1 to 5, wherein the first reference symbol ($R_1$) and second reference symbol ($R_2$) are pilot symbols.

7. The method according to one of claims 1 to 6, further comprising:

   obtaining at least one second data symbol (D) that is not comprised between the first reference symbol ($R_1$) and second reference symbol ($R_2$) in the sequence of symbols,
   determining a fourth scrambling symbol ($S_x$) corresponding to the at least one second data symbol (D) as an extrapolated value of the first scrambling symbol ($S_1$) and the second scrambling symbol ($S_7$), and
   multiplying the at least one second data symbol (D) with the determined corresponding fourth scrambling symbol ($S_x$).

8. A method for scrambling a matrix of symbols comprising at least two reference symbols ($R_1$, $R_2$) and at least one first data symbol ($D_{r.c}$), said method comprising the following steps:

obtaining a first reference symbol ($R_1$) and a second reference symbol ($R_2$),
determining a first scrambling symbol ($S_1$) corresponding to the first reference symbol ($R_1$) and a second scrambling symbol ($S_6$) corresponding to the second reference symbol ($R_2$),
obtaining at least one first data symbol ($D_{r,c}$) comprised in a matrix defined by the first reference symbol ($R_1$) and second reference symbol ($R_2$) within the matrix of symbols,
determining a third scrambling symbol ($S_{r,c}$) corresponding to the at least one first data symbol ($D_{r,c}$), wherein said third scrambling symbol ($S_{r,c}$) is determined to be constant for one of a row or column of said first data symbol ($D_{r,c}$), and said third scrambling symbol ($S_{r,c}$) is further determined as an interpolated value between the first scrambling symbol ($S_1$) and the second scrambling symbol ($S_6$) with respect to the one of the row or column of said first data symbol ($D_{r,c}$), and
multiplying the first reference symbol ($R_1$) with the determined corresponding first scrambling symbol ($S_1$), the second reference symbol ($R_2$) with the determined corresponding second scrambling symbol ($S_6$), and the at least one first data symbol ($D_{r,c}$) with the determined corresponding third scrambling symbol ($S_{r,c}$).

9. The method according to claim 8, wherein the third scrambling symbol ($S_{r,c}$) is determined using a linear interpolation between the first scrambling symbol ($S_1$) and the second scrambling symbol ($S_6$).

10. The method according to claim 8, wherein the third scrambling symbol ($S_{r,c}$) is determined using an exponential interpolation between the first scrambling symbol ($S_1$) and the second scrambling symbol ($S_6$).

11. The method according to one of claims 8 to 10, wherein the first reference symbol ($R_1$) and second reference symbol ($R_2$) are pilot symbols.

12. The method according to one of claims 8 to 11, further comprising:

obtaining at least one second data symbol ($D_{r,c}$) that is not comprised in the matrix defined by the first reference symbol ($R_1$) and second reference symbol ($R_2$) within the matrix of symbols,
determining a fourth scrambling symbol ($S_{r,c}$) corresponding to the at least one second data symbol ($D_{r,c}$) as an extrapolated value of the first scrambling symbol ($S_1$) and the second scrambling symbol ($S_6$) with respect to the one of the row or column of said second data symbol ($D_{r,c}$), and
multiplying the at least one second data symbol ($D_{r,c}$) with the determined corresponding fourth scrambling symbol ($S_{r,c}$).

13. The method according to one of claims 1 to 12, further comprising normalising the first scrambling symbol ($S_1$), second scrambling symbol ($S_7$, $S_6$), and at least one third scrambling symbol ($S_{r,c}$) prior to the step of multiplying, such that an average power of the set of the first scrambling symbol ($S_1$), second scrambling symbol ($S_7$, $S_6$) and at least one third scrambling symbol ($S_{r,c}$) is one.

14. The method according to claim 13, wherein the step of determining a third scrambling symbol ($S_x$, $S_{r,c}$) and normalising are carried out such that a power of at least one of first scrambling symbol ($S_1$) and second scrambling symbol ($S_7$, $S_6$) is greater than one, and

a power of a determined third scrambling symbol ($S_x$, $S_{r,c}$) that is close to at least one of first scrambling symbol ($S_1$) and second scrambling symbol ($S_7$, $S_6$) is greater than one, and
the power of a determined third scrambling symbol ($S_x$, $S_{r,c}$) decreases with increasing distance to the closest of the first scrambling symbol ($S_1$) and second scrambling symbol ($S_7$, $S_6$).

15. A method for scrambling a matrix of symbols comprising at least four reference symbols ($R_1$, $R_2$, $R_3$, $R_4$) and at least one first data symbol ($D_{r,c}$), said method comprising the following steps:

obtaining a first reference symbol ($R_1$), a second reference symbol ($R_2$), a third reference symbol ($R_3$), and a fourth reference symbol ($R_4$),
determining a first scrambling symbol ($S_{1,1}$) corresponding to the first reference symbol ($R_1$), a second scrambling symbol ($S_{1,7}$) corresponding to the second reference symbol ($R_2$), a third scrambling symbol ($S_{6,1}$) corresponding to the third reference symbol ($R_3$) and a fourth scrambling symbol ($S_{6,7}$) corresponding to the fourth reference symbol ($R_4$),
obtaining at least one first data symbol ($D_{r,c}$) comprised between the first reference symbol ($R_1$), second reference symbol ($R_2$), third reference symbol ($R_3$), and fourth reference symbol ($R_4$) in the matrix of symbols,

determining a fifth scrambling symbol ($S_{r,c}$) corresponding to the at least one first data symbol ($D_{r,c}$) as an interpolated value of the first scrambling symbol ($S_{1,1}$), second scrambling symbol ($S_{1,7}$), third scrambling symbol ($S_{6,1}$) and fourth scrambling symbol ($S_{6,7}$), and
multiplying the first reference symbol ($R_1$) with the determined corresponding first scrambling symbol ($S_{1,1}$), the second reference symbol ($R_2$) with the determined corresponding second scrambling symbol ($S_{1,7}$), the third reference symbol ($R_3$) with the determined corresponding third scrambling symbol ($S_{6,1}$), the fourth reference symbol ($R_4$) with the determined corresponding fourth scrambling symbol ($S_{6,7}$), and the at least one first data symbol ($D_{r,c}$) with the determined corresponding fifth scrambling symbol ($S_{r,c}$).

16. The method according to claim 15, wherein the obtained first reference symbol ($R_1$) and second reference symbol ($R_2$) are arranged on a same line of the matrix of symbols, the obtained third reference symbol ($R_3$) is arranged in a same column of the matrix of symbols as the first reference symbol ($R_1$), and the obtained fourth reference symbol ($R_4$) is arranged in a same column of the matrix of symbols as the second reference symbol ($R_2$) and on a same line of the matrix of symbols as the third reference symbol ($R_3$), the first reference symbol ($R_1$), second reference symbol ($R_2$), third reference symbol ($R_3$) and fourth reference symbol ($R_4$) thereby defining a matrix of symbols comprising at least one first data symbol ($D_{r,c}$).

17. The method according to one of claims 15 or 16, wherein the first reference symbol ($R_1$) is obtained for a first time instance and a first frequency, the second reference symbol ($R_2$) is obtained for a second time instance and the first frequency, the third reference symbol ($R_3$) is obtained for the first time instance and a second frequency, the fourth reference symbol ($R_4$) is obtained for the second time instance and the second frequency, the second time instance having a value that is larger than a value of the first time instance and the second frequency having a value that is larger than a value of the first frequency, and the at least one data symbol ($D_{r,c}$) is obtained for a third time instance having a value that is comprised in a range from the value of the first time instance to the value of the second time instance, and for a third frequency having a value that is comprised in a range from the value of the first frequency to the value of the second frequency.

18. The method according to one of claims 15 to 17, wherein the fifth scrambling symbol ($S_{r,c}$) is determined using a bilinear interpolation between the first scrambling symbol ($S_{1,1}$), second scrambling symbol ($S_{1,7}$), third scrambling symbol ($S_{6,1}$) and fourth scrambling symbol ($S_{6,7}$).

19. The method according to one of claims 15 to 18, wherein the fifth scrambling symbol ($S_{r,c}$) is determined using an exponential interpolation between the first scrambling symbol ($S_{1,1}$), second scrambling symbol ($S_{1,7}$), third scrambling symbol ($S_{6,1}$) and fourth scrambling symbol ($S_{6,7}$).

20. The method according to one of claims 15 to 19, wherein the first reference symbol ($R_1$), second reference symbol ($R_2$), third reference symbol ($R_3$) and fourth reference symbol ($R_4$) are pilot symbols.

21. The method according to one of claims 16 to 20, wherein, when the first scrambling symbol ($S_{1,1}$) and second scrambling symbol ($S_{1,7}$) are identical, the fifth scrambling symbol ($S_{r,c}$) corresponding to a first data symbol ($D_{r,c}$) located on the same line as the first reference symbol ($R_1$) in the matrix of symbols is determined as the first scrambling symbol ($S_{1,1}$), and the fifth scrambling symbol ($S_{r,c}$) corresponding to a first data symbol ($D_{r,c}$) located on a different line as the first reference symbol ($R_1$) is determined as an interpolated value between the first scrambling symbol ($S_{1,1}$) and third scrambling symbol ($S_{6,1}$).

22. The method according to one of claims 15 to 21, further comprising:

obtaining at least one second data symbol ($D_{r,c}$) that is not comprised between the first reference symbol ($R_1$), second reference symbol ($R_2$), third reference symbol ($R_3$), and fourth reference symbol ($R_4$) in the matrix of symbols,
determining a sixth scrambling symbol ($S_{r,c}$) corresponding to the at least one second data symbol ($D_{r,c}$) as an extrapolated value of the first scrambling symbol ($S_{1,1}$), second scrambling symbol ($S_{1,7}$), third scrambling symbol ($S_{6,1}$) and fourth scrambling symbol ($S_{6,7}$), and
multiplying the at least one second data symbol ($D_{r,c}$) with the determined corresponding sixth scrambling symbol ($S_{r,c}$).

23. The method according to one of claims 15 to 22, further comprising normalising the first scrambling symbol ($S_{1,1}$), second scrambling symbol ($S_{1,7}$), third scrambling symbol ($S_{6,1}$), fourth scrambling symbol ($S_{6,7}$) and at least one fifth scrambling symbol ($S_{r,c}$) prior to the step of multiplying, such that an average power of the set of the first scrambling symbol ($S_{1,1}$), second scrambling symbol ($S_{1,7}$), third scrambling symbol ($S_{6,1}$), fourth scrambling symbol ($S_{6,7}$) and at least one fifth scrambling symbol ($S_{r,c}$) is one.

**24.** The method according to claim 23, wherein the step of determining a fifth scrambling symbol ($S_{r,c}$) and normalising are carried out such that a power of at least one of first scrambling symbol ($S_{1,1}$), second scrambling symbol ($S_{1,7}$), third scrambling symbol ($S_{6,1}$) and fourth scrambling symbol ($S_{6,7}$) is greater than one,

a power of a determined fifth scrambling symbol ($S_{r,c}$) that is close to at least one of first scrambling symbol ($S_{1,1}$), second scrambling symbol ($S_{1,7}$), third scrambling symbol ($S_{6,1}$) and fourth scrambling symbol ($S_{6,7}$) is greater than one, and
the power of a determined fifth scrambling symbol ($S_{r,c}$) decreases with increasing distance to the closest of the first scrambling symbol ($S_{1,1}$), second scrambling symbol ($S_{1,7}$), third scrambling symbol ($S_{6,1}$) and fourth scrambling symbol ($S_{6,7}$).

**25.** A method for transmitting from a transmitting end to a receiving end a sequence of symbols comprising at least two reference symbols ($R_1$, $R_2$) and at least one data symbol (D), said method comprising the following steps:

obtaining a first reference symbol ($R_1$) and a second reference symbol ($R_2$),
determining a first scrambling symbol ($S_1$) corresponding to the first reference symbol ($R_1$) and a second scrambling symbol ($S_7$) corresponding to the second reference symbol ($R_2$),
obtaining at least one data symbol (D) comprised in a range from the first reference symbol ($R_1$) to the second reference symbol ($R_2$) in the sequence of symbols to be transmitted,
determining a third scrambling symbol ($S_x$) corresponding to the at least one data symbol (D) as an interpolated value of the first scrambling symbol ($S_1$) and the second scrambling symbol ($S_7$),
multiplying the first reference symbol ($R_1$) with the determined corresponding first scrambling symbol ($S_1$), the second reference symbol ($R_2$) with the determined corresponding second scrambling symbol ($S_7$), and the at least one data symbol (D) with the determined corresponding third scrambling symbol ($S_x$), thereby scrambling the sequence of symbols, and
transmitting the scrambled sequence of symbols from the transmitting end to the receiving end.

**26.** A method for transmitting from a transmitting end to a receiving end a matrix of symbols comprising at least two reference symbols ($R_1$, $R_2$) and at least one data symbol ($D_{r,c}$), said method comprising the following steps:

obtaining a first reference symbol ($R_1$) and a second reference symbol ($R_2$),
determining a first scrambling symbol ($S_1$) corresponding to the first reference symbol ($R_1$) and a second scrambling symbol ($S_6$) corresponding to the second reference symbol ($R_2$),
obtaining at least one data symbol ($D_{r,c}$) comprised in a matrix defined by the first reference symbol ($R_1$) and second reference symbol ($R_2$) within the matrix of symbols,
determining a third scrambling symbol ($S_{r,c}$) corresponding to the at least one data symbol ($D_{r,c}$), wherein said third scrambling symbol ($S_{r,c}$) is determined to be constant for one of a row or column of said data symbol ($D_{r,c}$), and said third scrambling symbol ($S_{r,c}$) is further determined as an interpolated value between the first scrambling symbol ($S_1$) and the second scrambling symbol ($S_6$) with respect to the one of the row or column of said data symbol ($D_{r,c}$),
multiplying the first reference symbol ($R_1$) with the determined corresponding first scrambling symbol ($S_1$), the second reference symbol ($R_2$) with the determined corresponding second scrambling symbol ($S_6$), and the at least one data symbol ($D_{r,c}$) with the determined corresponding third scrambling symbol ($S_{r,c}$), thereby scrambling the matrix of symbols, and
transmitting the scrambled matrix of symbols from the transmitting end to the receiving end.

**27.** A method for transmitting from a transmitting end to a receiving end a matrix of symbols comprising at least four reference symbols ($R_1$, $R_2$, $R_3$, $R_4$) and at least one data symbol ($D_{r,c}$), said method comprising the following steps:

obtaining a first reference symbol ($R_1$), a second reference symbol ($R_2$), a third reference symbol ($R_3$), and a fourth reference symbol ($R_4$),
determining a first scrambling symbol ($S_{1,1}$) corresponding to the first reference symbol ($R_1$), a second scrambling symbol ($S_{1,7}$) corresponding to the second reference symbol ($R_2$), a third scrambling symbol ($S_{6,1}$) corresponding to the third reference symbol ($R_3$) and a fourth scrambling symbol ($S_{6,7}$) corresponding to the fourth reference

symbol ($R_4$),

obtaining at least one data symbol ($D_{r,c}$) comprised between the first reference symbol ($R_1$), second reference symbol ($R_2$), third reference symbol ($R_3$), and fourth reference symbol ($R_4$) in the matrix of symbols,

determining a fifth scrambling symbol ($S_{r,c}$) corresponding to the at least one data symbol ($D_{r,c}$) as an interpolated value of the first scrambling symbol ($S_{1,1}$), second scrambling symbol ($S_{1,7}$), third scrambling symbol ($S_{6,1}$) and fourth scrambling symbol ($S_{6,7}$),

multiplying the first reference symbol ($R_1$) with the determined corresponding first scrambling symbol ($S_{1,1}$), the second reference symbol ($R_2$) with the determined corresponding second scrambling symbol ($S_{1,7}$), the third reference symbol ($R_3$) with the determined corresponding third scrambling symbol ($S_{6,1}$), the fourth reference symbol ($R_4$) with the determined corresponding fourth scrambling symbol ($S_{6,7}$), and the at least one data symbol ($D_{r,c}$) with the determined corresponding fifth scrambling symbol ($S_{r,c}$), thereby scrambling the matrix of symbols, and

transmitting the scrambled matrix of symbols from the transmitting end to the receiving end.

28. The method according to one of claims 25 to 27, further comprising sending to the receiving end information on an interpolation type used for determining a scrambling symbol ($S_x$, $D_{r,c}$) corresponding to the at least one data symbol ($D_x$, $D_{r,c}$).

29. An apparatus for scrambling a sequence of symbols comprising at least two reference symbols ($R_1$, $R_2$) and at least one first data symbol (D), said apparatus comprising:

obtaining means for obtaining a first reference symbol ($R_1$) and a second reference symbol ($R_2$),

determining means for determining a first scrambling symbol ($S_1$) corresponding to the first reference symbol ($R_1$) and a second scrambling symbol ($S_7$) corresponding to the second reference symbol ($P_2$),

wherein said obtaining means are adapted to obtain at least one first data symbol (D) comprised in a range from the first reference symbol ($R_1$) to the second reference symbol ($R_2$) in the sequence of symbols to be transmitted, and

said determining means are adapted to determine a third scrambling symbol ($S_x$) corresponding to the at least one first data symbol (D) as an interpolated value of the first scrambling symbol ($S_1$) and the second scrambling symbol ($S_7$), and

said apparatus further comprises multiplying means for multiplying the first reference symbol ($R_1$) with the determined corresponding first scrambling symbol ($S_1$), the second reference symbol ($R_2$) with the determined corresponding second scrambling symbol ($S_7$), and the at least one first data symbol (D) with the determined corresponding third scrambling symbol ($S_x$).

30. The apparatus according to claim 29, wherein said apparatus is adapted to perform the steps of the method according to one of claims 2 to 7.

31. An apparatus for scrambling a matrix of symbols comprising at least two reference symbols ($R_1$, $R_2$) and at least one first data symbol ($D_{r,c}$), said apparatus comprising:

obtaining means for obtaining a first reference symbol ($R_1$) and a second reference symbol ($R_2$),

determining means for determining a first scrambling symbol ($S_1$) corresponding to the first reference symbol ($R_1$) and a second scrambling symbol ($S_6$) corresponding to the second reference symbol ($R_2$),

wherein said obtaining means are adapted to obtain at least one first data symbol ($D_{r,c}$) comprised in a matrix defined by the first reference symbol ($R_1$) and second reference symbol ($R_2$) within the matrix of symbols, and

said determining means are adapted to determine a third scrambling symbol ($S_{r,c}$) corresponding to the at least one first data symbol ($D_{r,c}$), wherein said third scrambling symbol ($S_{r,c}$) is determined to be constant for one of a row or column of said first data symbol ($D_{r,c}$), and said third scrambling symbol ($S_{r,c}$) is further determined as an interpolated value between the first scrambling symbol ($S_1$) and the second scrambling symbol ($S_6$) with respect to the one of the row or column of said first data symbol ($D_{r,c}$), and

said apparatus further comprises multiplying means for multiplying the first reference symbol ($R_1$) with the determined corresponding first scrambling symbol ($S_1$), the second reference symbol ($R_2$) with the determined corresponding second scrambling symbol ($S_6$), and the at least one first data symbol ($D_{r,c}$) with the determined corresponding third scrambling symbol ($S_{r,c}$).

32. The apparatus according to claim 31, wherein said apparatus is adapted to perform the steps of the method according to one of claims 9 to 14.

**33.** An apparatus for scrambling a matrix of symbols comprising at least four reference symbols ($R_1$, $R_2$, $R_3$, $R_4$) and at least one first data symbol ($D_{r,c}$), said apparatus comprising:

obtaining means for obtaining a first reference symbol ($R_1$), a second reference symbol ($R_2$), a third reference symbol ($R_3$), and a fourth reference symbol ($R_4$),

determining means for determining a first scrambling symbol ($S_{1,1}$) corresponding to the first reference symbol ($R_1$), a second scrambling symbol ($S_{1,7}$) corresponding to the second reference symbol ($R_2$), a third scrambling symbol ($S_{6,1}$) corresponding to the third reference symbol ($R_3$) and a fourth scrambling symbol ($S_{6,7}$) corresponding to the fourth reference symbol ($R_4$),

wherein said obtaining means are adapted to obtain at least one first data symbol ($D_{r,c}$) between the first reference symbol ($R_1$), second reference symbol ($R_2$), third reference symbol ($R_3$), and fourth reference symbol ($R_4$), and

said determining means are adapted to determine a fifth scrambling symbol ($S_{r,c}$) corresponding to the at least one first data symbol ($D_{r,c}$) as an interpolated value of the first scrambling symbol ($S_{1,1}$), second scrambling symbol ($S_{1,7}$), third scrambling symbol ($S_{6,1}$) and fourth scrambling symbol ($S_{6,7}$), and

said apparatus further comprises multiplying means for multiplying the first reference symbol ($R_1$) with the determined corresponding first scrambling symbol ($S_{1,1}$), the second reference symbol ($R_2$) with the determined corresponding second scrambling symbol ($S_{1,7}$), the third reference symbol ($R_3$) with the determined corresponding third scrambling symbol ($S_{6,1}$), the fourth reference symbol ($R_4$) with the determined corresponding fourth scrambling symbol ($S_{6,7}$), and the at least one first data symbol ($D_{r,c}$) with the determined corresponding fifth scrambling symbol ($S_{r,c}$).

**34.** The apparatus according to claim 33, wherein said apparatus is adapted to perform the steps of the method according to one of claims 16 to 24.

**35.** An apparatus for transmitting to a receiving end a sequence of symbols comprising at least two reference symbols ($R_1$, $R_2$) and at least one data symbol (D), said apparatus comprising:

obtaining means for obtaining a first reference symbol ($R_1$) and a second reference symbol ($R_2$),

determining means for determining a first scrambling symbol ($S_1$) corresponding to the first reference symbol ($R_1$) and a second scrambling symbol ($S_7$) corresponding to the second reference symbol ($P_2$),

wherein said obtaining means are adapted to obtain at least one first data symbol (D) comprised in a range from the first reference symbol ($R_1$) to the second reference symbol ($R_2$) in the sequence of symbols to be transmitted, and

said determining means are adapted to determine a third scrambling symbol ($S_x$) corresponding to the at least one first data symbol (D) as an interpolated value of the first scrambling symbol ($S_1$) and the second scrambling symbol ($S_7$), and

said apparatus further comprises multiplying means for multiplying the first reference symbol ($R_1$) with the determined corresponding first scrambling symbol ($S_1$), the second reference symbol ($R_2$) with the determined corresponding second scrambling symbol ($S_7$), and the at least one first data symbol (D) with the determined corresponding third scrambling symbol ($S_x$), thereby scrambling the sequence of symbols, and

transmitting means for transmitting the scrambled sequence of symbols to the receiving end.

**36.** An apparatus for transmitting to a receiving end a matrix of symbols comprising at least two reference symbols ($R_1$, $R_2$) and at least one first data symbol ($D_{r,c}$), said apparatus comprising:

obtaining means for obtaining a first reference symbol ($R_1$) and a second reference symbol ($R_2$),

determining means for determining a first scrambling symbol ($S_1$) corresponding to the first reference symbol ($R_1$) and a second scrambling symbol ($S_6$) corresponding to the second reference symbol ($R_2$),

wherein said obtaining means are adapted to obtain at least one first data symbol ($D_{r,c}$) comprised in a matrix defined by the first reference symbol ($R_1$) and second reference symbol ($R_2$) within the matrix of symbols, and

said determining means are adapted to determine a third scrambling symbol ($S_{r,c}$) corresponding to the at least one first data symbol ($D_{r,c}$), wherein said third scrambling symbol ($S_{r,c}$) is determined to be constant for one of a row or column of said first data symbol ($D_{r,c}$), and said third scrambling symbol ($S_{r,c}$) is further determined as an interpolated value between the first scrambling symbol ($S_1$) and the second scrambling symbol ($S_6$) with respect to the one of the row or column of said first data symbol ($D_{r,c}$), and

said apparatus further comprises multiplying means for multiplying the first reference symbol ($R_1$) with the determined corresponding first scrambling symbol ($S_1$), the second reference symbol ($R_2$) with the determined

corresponding second scrambling symbol ($S_6$), and the at least one first data symbol ($D_{r,c}$) with the determined corresponding third scrambling symbol ($S_{r,c}$), thereby scrambling the matrix of symbols, and

transmitting means for transmitting the scrambled matrix of symbols to the receiving end.

**37.** An apparatus for transmitting to a receiving end a matrix of symbols comprising at least four reference symbols ($R_1$, $R_2$, $R_3$, $R_4$) and at least one data symbol ($D_{r,c}$), said apparatus comprising:

obtaining means for obtaining a first reference symbol ($R_1$), a second reference symbol ($R_2$), a third reference symbol ($R_3$), and a fourth reference symbol ($R_4$),

determining means for determining a first scrambling symbol ($S_{1,1}$) corresponding to the first reference symbol ($R_1$), a second scrambling symbol ($S_{1,7}$) corresponding to the second reference symbol ($R_2$), a third scrambling symbol ($S_{6,1}$) corresponding to the third reference symbol ($R_3$) and a fourth scrambling symbol ($S_{6,7}$) corresponding to the fourth reference symbol ($R_4$),

wherein said obtaining means are adapted to obtain at least one first data symbol ($D_{r,c}$) comprised between the first reference symbol ($R_1$), second reference symbol ($R_2$), third reference symbol ($R_3$), and fourth reference symbol ($R_4$), and

said determining means are adapted to determine a fifth scrambling symbol ($S_{r,c}$) corresponding to the at least one first data symbol ($D_{r,c}$) as an interpolated value of the first scrambling symbol ($S_{1,1}$), second scrambling symbol ($S_{1,7}$), third scrambling symbol ($S_{6,1}$) and fourth scrambling symbol ($S_{6,7}$), and

said apparatus further comprises multiplying means for multiplying the first reference symbol ($R_1$) with the determined corresponding first scrambling symbol ($S_{1,1}$), the second reference symbol ($R_2$) with the determined corresponding second scrambling symbol ($S_{1,7}$), the third reference symbol ($R_3$) with the determined corresponding third scrambling symbol ($S_{6,1}$), the fourth reference symbol ($R_4$) with the determined corresponding fourth scrambling symbol ($S_{6,7}$), and the at least one first data symbol ($D_{r,c}$) with the determined corresponding fifth scrambling symbol ($S_{r,c}$), thereby scrambling the matrix of symbols, and

transmitting means for transmitting the scrambled matrix of symbols to the receiving end.

Any downlink
physical channel
except SCH

$C_{ch,SF,m}$

I

Q

j

$I+jQ$

$S_{dl,n}$

S

Fig. 1

All subcarriers in a
group are multiplied by
the same scrambling
symbol.

▨ Cell-specific scrambled pilot

▨ Cell-specific scrambled MBMS data

Fig. 2

Prior Art Scrambling
(Blockwise)

Scrambling for pilot and data subcarrier #1,
for data subcarriers #2-#4

Scrambling for data subcarriers #11-#12,
for pilot and data subcarrier #13,
for data subcarriers #14-16

Scrambling for data subcarriers #5-#6,
for pilot and data subcarrier #7,
for data subcarriers #8-10

Fig. 3

Raw Symbol

| $R_1$ | D | D | D | D | D | $R_z$ |
|-------|---|---|---|---|---|-------|

Scrambling Symbol

| $S_1$ | $S_2$ | $S_3$ | $S_4$ | $S_5$ | $S_6$ | $S_7$ |
|-------|-------|-------|-------|-------|-------|-------|

Fig. 4

Linear Interpolation
(reference scrambling symbol power is 1)

Fig. 5

Exponential Interpolation
(all scrambling symbols have power 1)

Fig. 6

## Linear Interpolation
## (average scrambling symbol power is 1)

Fig. 7

Raw Symbol

| $R_1$ | D | D | D | D | D | $R_2$ |
|---|---|---|---|---|---|---|
| D | D | D | D | D | D | D |
| D | D | D | D | D | D | D |
| D | D | D | D | D | D | D |
| D | D | D | D | D | D | D |
| $R_3$ | D | D | D | D | D | $R_4$ |

Scrambling Symbol

| $S_{1,1}$ | $S_{1,2}$ | $S_{1,3}$ | $S_{1,4}$ | $S_{1,5}$ | $S_{1,6}$ | $S_{1,7}$ |
|---|---|---|---|---|---|---|
| $S_{2,1}$ | $S_{2,2}$ | $S_{2,3}$ | $S_{2,4}$ | $S_{2,5}$ | $S_{2,6}$ | $S_{2,7}$ |
| $S_{3,1}$ | $S_{3,2}$ | $S_{3,3}$ | $S_{3,4}$ | $S_{3,5}$ | $S_{3,6}$ | $S_{3,7}$ |
| $S_{4,1}$ | $S_{4,2}$ | $S_{4,3}$ | $S_{4,4}$ | $S_{4,5}$ | $S_{4,6}$ | $S_{4,7}$ |
| $S_{5,1}$ | $S_{5,2}$ | $S_{5,3}$ | $S_{5,4}$ | $S_{5,5}$ | $S_{5,6}$ | $S_{5,7}$ |
| $S_{6,1}$ | $S_{6,2}$ | $S_{6,3}$ | $S_{6,4}$ | $S_{6,5}$ | $S_{6,6}$ | $S_{6,7}$ |

Fig. 8

Raw Symbol

| $R_1$ | D | D | D | D | D | D |
|---|---|---|---|---|---|---|
| D | D | D | D | $R_2$ | D | D |
| D | D | D | D | D | D | D |
| D | $R_3$ | D | D | D | D | D |
| D | D | D | D | D | D | D |
| D | D | D | D | D | D | $R_4$ |

Scrambling Symbol

| $S_{1,1}$ | $S_{1,2}$ | $S_{1,3}$ | $S_{1,4}$ | $S_{1,5}$ | $S_{1,6}$ | $S_{1,7}$ |
|---|---|---|---|---|---|---|
| $S_{2,1}$ | $S_{2,2}$ | $S_{2,3}$ | $S_{2,4}$ | $S_{2,5}$ | $S_{2,6}$ | $S_{2,7}$ |
| $S_{3,1}$ | $S_{3,2}$ | $S_{3,3}$ | $S_{3,4}$ | $S_{3,5}$ | $S_{3,6}$ | $S_{3,7}$ |
| $S_{4,1}$ | $S_{4,2}$ | $S_{4,3}$ | $S_{4,4}$ | $S_{4,5}$ | $S_{4,6}$ | $S_{4,7}$ |
| $S_{5,1}$ | $S_{5,2}$ | $S_{5,3}$ | $S_{5,4}$ | $S_{5,5}$ | $S_{5,6}$ | $S_{5,7}$ |
| $S_{6,1}$ | $S_{6,2}$ | $S_{6,3}$ | $S_{6,4}$ | $S_{6,5}$ | $S_{6,6}$ | $S_{6,7}$ |

Step-wise
interpolation

Fig. 9

Scrambled with same
symbol, phase e.g. 0°

Scrambling with
linear interpolated
phase, e.g. between
0° and 120°

Scrambled with s
symbol, phase e.g. 120°

Scrambling with
linear interpolated
phase, e.g. between
120° and 240°

Scrambled with s
symbol, phase

Scrambling with
linear interpolated
phase, e.g. between
240° and 0°

Scrambled with s
symbol, phase e.g. 0°

**Fig. 10**

Transmission unit

| Raw Symbol | D | D | R | D | D | D | D | D | R | D | D |
|---|---|---|---|---|---|---|---|---|---|---|---|

| Scrambling Symbol | $S_1$ | $S_2$ | $S_3$ | $S_4$ | $S_5$ | $S_6$ | $S_7$ | $S_8$ | $S_9$ | $S_{10}$ | $S_{11}$ |
|---|---|---|---|---|---|---|---|---|---|---|---|

Extrapolation          Interpolation          Extrapolation

**Fig. 11**

Raw Symbol

| $R_1$ | D | D | D | D | D | D |
|---|---|---|---|---|---|---|
| D | D | D | D | D | D | D |
| D | D | D | D | D | D | D |
| D | D | D | D | D | D | D |
| D | D | D | D | D | D | D |
| D | D | D | D | D | D | $R_z$ |

Scrambling Symbol

$S_1$ ⟶
⟵ $S_2$ ⟶
⟵ $S_3$ ⟶
⟵ $S_4$ ⟶
⟵ $S_5$ ⟶
⟵ $S_6$

Fig. 12

**European Patent Office**

## EUROPEAN SEARCH REPORT

Application Number

EP 06 00 6875

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | TOSHIBA CORPORATION, NTT DOCOMO: "MBMS Channel Structure for Evolved UTRA" TSG-RAN WG1 #44 MEETING, R1-060527, 13 February 2006 (2006-02-13), pages 1-6, XP002396923 Denver, USA * figures 1(d1),(d2) * | 1-17, 29-37 | INV. H04L25/03 H04L9/00 |

TECHNICAL FIELDS SEARCHED (IPC)

H04L

The present search report has been drawn up for all claims

| Place of search | Date of completion of the search | Examiner |
|---|---|---|
| Berlin | 31 August 2006 | Feng, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................................

& : member of the same patent family, corresponding document

EPO FORM 1503 03.82 (P04C01)